# EUROPEAN PATENT APPLICATION

(11) **EP 4 825 209 A1**
(43) Date of publication of application: **21.10.2026**
(21) Application number: 23961465.4
(22) Date of filing: 13.12.2023
(51) Int. Cl.: A24F 40/40, A24F 40/95

(54) **AEROSOL GENERATION DEVICE**

(71) Applicant: Japan Tobacco Inc., Tokyo 105-6927 (JP)
(72) Inventor: AOYAMA Tatsunari, Tokyo 130-8603 (JP); ARADACHI Takao, Tokyo 130-8603 (JP)
(74) Representative: Hoffmann Eitle
(86) International application number: PCT/JP2023/044712
(87) International publication number: WO 2025/126399

(57) **Abstract**

An inhalation device for generating an aerosol by heating an aerosol source, comprising: a heating unit (121) for heating the aerosol source; a power supply unit (110) having a battery (1111) as a power source unit, configured to supply power to the heating unit (121); and a case having a power supply accommodating portion for accommodating the power supply unit (110). The power supply unit (110) is configured with a plurality of components fixed together, including an MCU (1161) as a control element for controlling the supply of power from the battery (1111) to the heating unit (121), and the power supply unit is removably arranged in the power supply accommodating portion of the case in a fixed together state.

## Description

### TECHNICAL FIELD

The present disclosure relates to an aerosol-generating device.

### BACKGROUND ART

Aerosol-generating devices that generate an aerosol to which a flavor component has been added and enable a user to inhale the generated aerosol, for example, are conventionally known. Such aerosol-generating devices typically generate an aerosol by heating an aerosol source using a heating unit, which is an electrical resistance type or inductive heating type heater.

The battery of the aerosol-generating device degrades with age and usage. In the following PTL 1, an electronic cigarette device that enables the battery to be replaced is disclosed. It is also stated in the following PTL 2 that the battery held by the battery support is arranged to face the board exposed in the case.

### CITATION LIST

### PATENT LITERATURE

PTL 1: CN 107373765 A
PTL 2: JP 2022-524791 A

### SUMMARY OF INVENTION

### TECHNICAL PROBLEM

However, the history of research and development into aerosol-generating devices is still at an early stage, and there is room for improvement from the perspective of improving user convenience.

The present disclosure provides an aerosol-generating device with improved user convenience.

### SOLUTION TO PROBLEM

The present disclosure relates to
an aerosol-generating device for generating an aerosol by heating an aerosol source, the aerosol-generating device comprising:
a heating unit for heating the aerosol source;
a power supply unit having a power source unit configured to be capable of supplying power to the heating unit; and
a case having a power supply accommodating portion for accommodating the power supply unit,
wherein
the power supply unit is configured with a plurality of components fixed together, including a control element for controlling the supply of power from the power source unit to the heating unit, and the power supply unit is removably arranged in the power supply accommodating portion in a fixed together state.

### ADVANTAGEOUS EFFECTS OF INVENTION

The present disclosure makes it possible to provide an aerosol-generating device capable of providing improved user convenience.

### BRIEF DESCRIPTION OF DRAWINGS

Fig. 1 is a schematic diagram schematically showing a configuration example of an inhalation device;
Fig. 2 is a diagram showing an example of the external configuration of an inhalation device 100;
Fig. 3 is a diagram illustrating a first example of an attachment/detachment aspect of a power supply unit 110;
Fig. 4 is a diagram illustrating a second example of an attachment/detachment aspect of the power supply unit 110;
Fig. 5 is a diagram illustrating a third example of an attachment/detachment aspect of the power supply unit 110;
Fig. 6 is a diagram showing an example of the configuration of the power supply unit 110;
Fig. 7 is a diagram showing an example of a heater circuit 95 for obtaining the electrical resistance value of the heating unit 121; and
Fig. 8 is a diagram showing another example of the configuration of the power supply unit 110.

### DESCRIPTION OF EMBODIMENTS

An embodiment of an aerosol-generating device according to the present disclosure will be described in detail below with reference to the drawings. The drawings should be viewed in the orientation of the reference signs. The embodiment described below is an exemplary case in which the aerosol-generating device according to the present disclosure is applied to an inhalation device. It should be noted that not all of the features described in the following embodiment are essential for the aerosol-generating device of the present disclosure. In addition, two or more of the plurality of features described in the following embodiment may be combined in any way. Furthermore, hereinafter, identical or similar elements may be assigned identical or similar reference signs, and descriptions thereof may be omitted or simplified as appropriate.

### 1. Configuration Example of Inhalation Device

The inhalation device of this embodiment, which constitutes an example of the aerosol-generating device of the present disclosure, is a device for generating a substance to be inhaled by a user. Hereinafter, the substance generated by the inhalation device is described as being an aerosol. Alternatively, the substance generated by the inhalation device may be a gas.

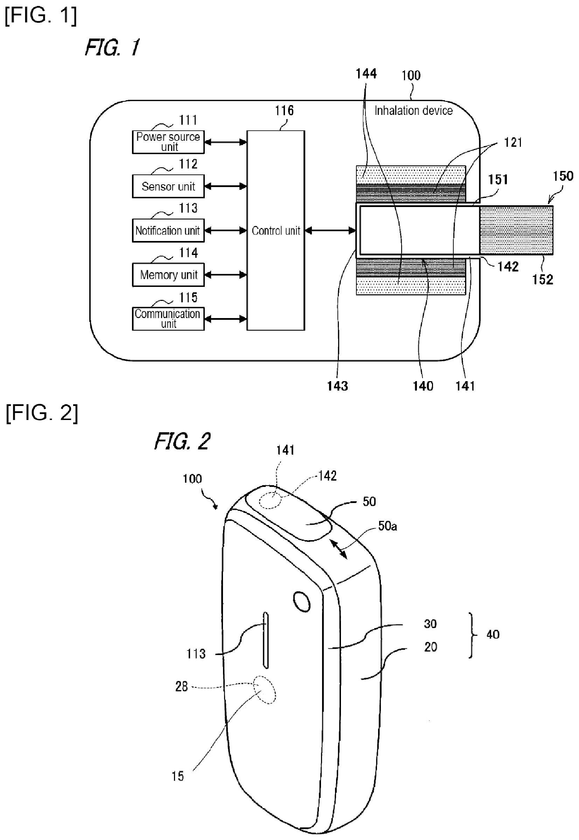

Fig. 1 is a schematic diagram schematically showing a configuration example of an inhalation device. As shown in Fig. 1, an inhalation device 100 comprises, for example, a power source unit 111, a sensor unit 112, a notification unit 113, a memory unit 114, a communication unit 115, a control unit 116, a heating unit 121, an accommodating portion 140, and a heat insulating portion 144.

The power source unit 111 stores electrical power. The power source unit 111 then supplies the electrical power to each component of the inhalation device 100 in accordance with control performed by the control unit 116. Furthermore, the power source unit 111 is configured to be chargeable by means of power received from an external power source. The external power source may for example be an AC adapter (AC: alternating current), a mobile charger, a PC (personal computer), or the like. The power source unit 111 may be configured by a rechargeable battery such as a lithium ion secondary battery, for example.

In the inhalation device 100, a power supply unit 110 (described later) comprising the power source unit 111, is removable, but details will be described later. That is, the inhalation device 100 enables the user to replace the power supply unit 110, such as by removing an old power supply unit 110 and installing a new power supply unit 110.

The sensor unit 112 acquires various types of information relating to the inhalation device 100. The sensor unit 112 is configured with, for example, a pressure sensor such as a capacitor microphone, a flow rate sensor or a temperature sensor, or the like, and acquires values associated with inhalation by a user.

As an example, the sensor unit 112 may include a pressure sensor (also referred to as a "puff sensor") for measuring the change in pressure (also referred to hereinafter as "internal pressure") in the inhalation device 100 caused by inhalation by the user. As another example, the sensor unit 112 may include a flow rate sensor for measuring the flow rate caused by inhalation by the user (hereinafter simply referred to as "flow rate"). As another example, the sensor unit 112 may include a temperature sensor (also referred to as a "heater thermistor") for measuring the temperature of the heating unit 121 or around the heating unit 121. In addition, the sensor unit 112 may include a voltage sensor for measuring the terminal voltage of the power source unit 111, a temperature sensor for measuring the temperature of the power source unit 111, and the like.

The sensor unit 112 may also include an operation detector to detect an operation by the user. In other words, the sensor unit 112 may also function as an input unit that receives input of information from the user. In this case, the sensor unit 112 may comprise an operation button, an operation switch, a motion sensor, a Hall sensor, and so on.

The notification unit 113 notifies the user of information. The notification unit 113 may, for example, be configured by a light-emitting device that emits light, a display device that displays images, a sound output device that outputs sound, or a vibration device that vibrates, or the like. Here, the light-emitting device may be realized by a light-emitting element such as an LED (Light-Emitting Diode), and a drive circuit for causing the light-emitting element to emit light, and the like. Furthermore, the display device may be a liquid crystal display or an OLED display (OLED: Organic Light-Emitting Diode). The sound output device may be a speaker, for example. The vibration device may be a vibrator comprising a motor and an eccentric weight attached to a rotary shaft of the motor, for example.

The memory unit 114 stores various information (e.g., programs and data) for operation of the inhalation device 100. The memory unit 114 is configured by a non-volatile storage medium such as a flash memory, for example.

The communication unit 115 is a communication interface capable of performing communication conforming to any wired or wireless communication standard. Examples of communication standards that may be used include standards that employ Wi-Fi (registered trademark), Bluetooth (registered trademark), BLE (Bluetooth Low Energy) (registered trademark), NFC (Near-Field Communication), or LPWA (Low Power Wide Area).

The control unit 116 functions as an arithmetic processing device and a control device, and controls overall operation within the inhalation device 100 in accordance with a program stored in the memory unit 114, and so on. For example, the control unit 116 controls the supply of electricity (power supply) from the power source unit 111 to each component, and controls charging of the power source unit 111 by means of power received from the external power source. The control unit 116 is realized, for example, by electronic circuitry comprising an IC (Integrated Circuit) such as a Central Processing Unit (CPU) or a microprocessor (also referred to as a "Micro Controller Unit (MCU)"). Also, the control unit 116 may be composed of a single IC or two or more ICs.

The accommodating portion 140 has an internal space 141, and holds a stick-type substrate 150 while accommodating a portion of the stick-type substrate 150 in the internal space 141. The accommodating portion 140 has an opening 142 allowing the internal space 141 to communicate with the outside, and accommodates the stick-type substrate 150 which has been inserted into the internal space 141 from the opening 142. For example, the accommodating portion 140 is a cylindrical body comprising the opening 142 and a bottom portion 143 serving as a bottom surface, and defines a columnar internal space 141. An air flow path for supplying air to the internal space 141 is connected to the accommodating portion 140. An air inflow hole, which is an inlet for air into the air flow path, is disposed in a side surface of the inhalation device 100, for example. An air outflow hole, which is an outlet for air from the air flow path to the internal space 141, is disposed in the bottom portion 143, for example.

The stick-type substrate 150 comprises a substrate portion 151 and a mouthpiece portion 152. The substrate portion 151 contains an aerosol source. The aerosol source includes a tobacco-derived or non-tobacco-derived flavor component. If the inhalation device 100 is a medical inhaler such as a nebulizer, the aerosol source may include a drug. The aerosol source may, for example, be a liquid such as water or a polyhydric alcohol, for example glycerol or propylene glycol, containing the tobacco-derived or non-tobacco-derived flavor component, or may be a solid including the tobacco-derived or non-tobacco-derived flavor component. In a state in which the stick-type substrate 150 is held in the accommodating portion 140, at least part of the substrate portion 151 is accommodated in the internal space 141, and at least part of the mouthpiece portion 152 protrudes from the opening 142. Then, when the user holds the mouthpiece portion 152 protruding from the opening 142 in their mouth and inhales, air flows into the internal space 141 via the air flow path, which is not illustrated on the drawings, and reaches the inside of the user's mouth together with the aerosol generated from the substrate portion 151.

In the example shown in Fig. 1, the heating unit 121 is configured as a film heater formed by laying out a conductive track afforded by a heating resistive element having a correlation between electrical resistance value and temperature, and is arranged to cover the outer circumference of the accommodating portion 140. Then, when the heating unit 121 generates heat, the substrate portion 151 of the stick-type substrate 150 is heated from the outer circumference and an aerosol is generated. Note that for example nichrome or stainless steel can be used as the heating resistor of the heating unit 121.

The heat insulating portion 144 prevents heat transfer from the heating unit 121 to other components. For example, the heat insulating portion 144 is configured from a vacuum heat insulating material or an aerogel heat insulating material, or the like.

A configuration example of the inhalation device 100 has been described above. The inhalation device 100 is, of course, not limited to the configuration described above, and may adopt various configurations, such as those illustrated below by way of example.

As one example, the heating unit 121 may have a blade-like form and may be arranged so as to protrude into the internal space 141 from the bottom portion 143 of the accommodating portion 140. In that case, the blade-like heating unit 121 is inserted into the substrate portion 151 of the stick-type substrate 150 and heats the substrate portion 151 of the stick-type substrate 150 from the inside. As another example, the heating unit 121 may be arranged so as to cover the bottom portion 143 of the accommodating portion 140. Furthermore, the heating unit 121 may be configured by a combination of two or more from among the first heating unit covering the outer circumference of the accommodating portion 140, the blade-like second heating unit, and a third heating unit covering the bottom portion 143 of the accommodating portion 140.

As another example, the accommodating portion 140 may include an opening and closing mechanism such as a hinge for opening and closing part of an outer casing that forms the internal space 141. Then, by opening and closing the outer casing, the accommodating portion 140 may accommodate and grip the stick-type substrate 150 that has been inserted into the internal space 141. In that case, the heating unit 121 may be provided on the part of the accommodating portion 140 gripping the stick-type substrate 150, and may heat the stick-type substrate 150 while pressing same.

Furthermore, the means for atomizing the aerosol source is not limited to heating provided by the heating unit 121. For example, the means for atomizing the aerosol source may be induction heating. In that case, the inhalation device 100 comprises at least an electromagnetic induction source such as a coil for generating a magnetic field, instead of the heating unit 121. A susceptor, which generates heat by means of induction heating, may be provided in the inhalation device 100, or may be contained in the stick-type substrate 150.

### 2. Example of External Configuration of Inhalation Device

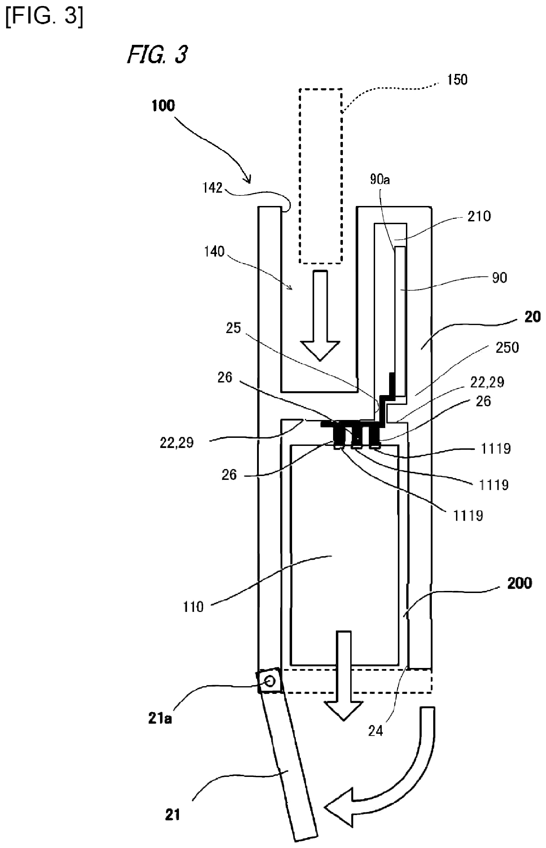

Fig. 2 is a diagram showing an example of the external configuration of the inhalation device 100. As shown in Fig. 2, the inhalation device 100 comprises, for example, a case 20, and a shutter 50. The case 20 houses for example the power supply unit 110 attached to the inhalation device 100 or a main body side board unit 90 (see for example Figs. 3 to 5).

The case 20 also has an opening 142 for receiving a stick-type substrate 150, and the shutter 50 is provided slidably relative to the case 20 to close the opening 142. Specifically, the shutter 50 is configured to move along the outer surface of the case 20 between a closed position (shown in Fig. 2) that closes the opening 142 and an open position (not shown on the drawings) that opens the opening 142 (see arrow 50a in Fig. 2). When the shutter 50 is in the closed position, the stick-type substrate 150 is restricted from accessing the accommodating portion 140 (internal space 141) provided inside the case 20. On the other hand, when the shutter 50 is in the open position, the stick-type substrate 150 is allowed to access the accommodating portion 140. For example, the user can manually operate the shutter 50 to move the shutter 50 between the closed position and the open position.

The main body side board unit 90 housed in the case 20 is configured by mounting various elements (in other words, electronic components) on a board that is, for example, a printed wiring board (PWB). The main body side board unit 90 may be comprised of a single board or two or more boards connected by wires or cables. Also, the board constituting the main body side board unit 90 may be a rigid board, a flexible board, or a combination of these.

The case 20 is also fitted with a panel 30. The panel 30 is attached to the case 20 to configure an outermost housing 40 of the aerosol-generating device 100. By including the panel 30, the inhalation device 100 can buffer the heat released to the outside even when the interior of the case 20 (for example, the heating unit 121 provided inside the case 20) generates heat. In other words, the panel 30 functions to insulate heat generated from the interior of the case 20. Furthermore, the panel 30 is formed so that the surface is substantially curved, and defines the internal space together with the surface of the case 20 when attached to the case 20.

When a user presses on a predetermined portion of the surface of the panel 30 with their fingertips, the panel 30 deforms to form an indentation toward the case 20. As a result of this deformation of the panel 30, a projection (not shown on the drawings) provided on the surface of the panel 30 facing the case 20 comes into contact with an operation button 28 provided on the surface of the case 20, thereby pressing the operation button 28. In other words, the fingertip-pressed portion of the surface of the panel 30 constitutes an operation portion 15 that receives the user's operation. Also, in Fig. 2, the portion denoted by the reference sign 113 is a portion that emits light, for example by transmitting light from a light emitting device provided in the case 20, and is an example of the previously described notification portion 113.

### 3. Insertion and Removal of the Power Supply Unit

As previously mentioned, the power supply unit 110 is removably provided in the case 20 of the inhalation device 100. Examples of aspects for insertion and removal of the power supply unit 110 will now be described in detail. It should be noted that in the inhalation device 100, the insertion and removal direction of the stick-type substrate 150 relative to the inhalation device 100 is the vertical direction, and in the inhalation device 100, the side in which the stick-type substrate 150 is inserted is defined as the upper side. In other words, the stick-type substrate 150 is inserted into the inhalation device 100 from above. Also, the direction perpendicular to the vertical direction may be called the transverse direction, and a surface facing the transverse direction may be called a side surface.

Also, in the following, first to third examples of insertion and removal aspects of the power supply unit 110 will be described, but the present disclosure is not limited to these examples. In other words, the power supply unit 110 may be removably provided in the inhalation device 100 by aspects other than the first to third examples described below.

Note that in each of Figs. 3 to 5, illustrations of the heating unit 121 and so on are omitted to make the drawings easier to see, but for example, the heating unit 121 is provided within the case 20 covering the outer circumference of the accommodating portion 140, and fixed to the case 20.

### 3-1. First Example of an Insertion and Removal Aspect of the Power Supply Unit

Fig. 3 is a diagram illustrating a first example of an insertion/removal aspect of the power supply unit 110. As shown in Fig. 3, the case 20 has a bottom wall portion 21 constituting at least a part of the lower surface of the case 20. The bottom wall portion 21 is provided in the case 20 so that it can be opened and closed about the axis of a hinge 21a that extends in a lateral direction. In other words, the lower surface of the case 20 is provided with an opening 24 configured to be opened and closed by the bottom wall portion 21.

In the lower region of the case 20, a power supply accommodating portion 200 is formed that can accommodate the power supply unit 110. When the bottom wall portion 21 is opened, the power supply accommodating portion 200 is in communication with the outside of the case 20, allowing the power supply unit 110 to be inserted into the power supply accommodating portion 200 from the opening 24.

Also a board accommodating portion 210 is formed in the upper region of the case 20. Thus, in the insertion direction of the power supply unit 110 inserted through the opening 24, the power supply accommodating portion 200 and the board accommodating portion 210 are provided in this order from the opening 24.

The board accommodating portion 210 of the case 20 accommodates the main body side board unit 90. The case 20 is also provided with a connection portion 26 which is connected to terminals 1119 of the power supply unit 110 accommodated in the power supply accommodating portion 200. The power supply unit 110 accommodated in the power supply accommodating portion 200 and the main body side board unit 90 are electrically connected via the terminals 1119, connection portion 26, and a flexible cable 250 provided to connect the connection portion 26 and the main body side board unit 90, and so on. This allows power to be supplied from the power supply unit 110 (in other words the power source unit 111) accommodated in the power supply accommodating portion 200 to the main body side board unit 90.

In the example shown in Fig. 3, the power supply unit 110 comprises a plurality of terminals 1119 and a connection portion 26 corresponding to each terminal 1119, provided in the case 20. Also, in the example shown in Fig. 3, the terminals 1119 of the power supply unit 110 are all provided on the top surface of the power supply unit 110. For this reason, all of the connection portions 26 of the case 20 are provided on the top wall portion 22 of the power supply accommodating portion 200.

When accommodated in the power supply accommodating portion 200, the power supply unit 110 is held by the bottom wall portion 21 and the top wall portion 22 of the power supply accommodating portion 200. The terminals 1119 of the power supply unit 110 are then held electrically connected to the corresponding connection portions 26 provided in the case 20.

The top wall portion 22 is a dividing wall portion arranged between the power supply accommodating portion 200 and the board accommodating portion 210 in the insertion direction of the power supply unit 110. The top wall portion 22 is arranged between the power supply accommodating portion 200 and the board accommodating portion 210 in the insertion direction of the power supply unit 110, thereby preventing the power supply unit 110 from entering the board accommodating portion 210 and contacting elements arranged on the main body side board unit 90.

Therefore, in the present example, the top wall portion 22 acts as a regulator 29 preventing intrusion of the power supply unit 110 into the board accommodating portion 210. In particular, the regulator 29 preferably covers at least the electrical connection of elements arranged on the main body side board unit 90 with the main body side board unit 90, more preferably covers the elements arranged on the main body side board unit 90, and even more preferably covers the entire main body side board unit 90, as viewed from the power supply accommodating portion 200.

Also in the present example, a communication portion 25 is formed in the top wall portion 22 in communication between the power supply accommodating portion 200 and the board accommodating portion 210, and the flexible cable 250 is inserted through the communication portion 25. Although the top wall portion 22 may be provided with the communication portion 25 in communication between the power supply accommodating portion 200 and the board accommodating portion 210, the area of the communication portion 25 perpendicular to the insertion direction of the power supply unit 110 is smaller than the area of the power supply unit 110 perpendicular to the insertion direction of the power supply unit 110. This prevents the power supply unit 110 from entering the board accommodating portion 210 via the communication portion 25 and coming into contact with elements arranged on the main body side board unit 90.

As an example, the main body side board unit 90 is mounted with a plurality of elements and electrical connections of the flexible cable 250 on a first surface 90a of the board, the first surface 90a being arranged in a direction perpendicular to the insertion direction of the power supply unit 110. Furthermore, by arranging the board in a position that does not overlap with the position of the communication portion 25 from the direction of insertion of the power supply unit 110, the mounting portions (in other words, the electrical connections) of the elements mounted on the board are arranged so as not to be exposed to the power supply accommodating portion 200. In other words, a portion of the regulator 29 is arranged between at least the power supply accommodating portion 200 and the mounting portion of the elements from the direction of insertion of the power supply unit 110. In particular, among the mounted elements, the mounting portion of the control element controlling the supply of power to the heating unit 121 (for example, an MCU 1161, described below) is preferably arranged not to be exposed to the power supply accommodating portion 200. In this way, safety can be increased because the power supply unit 110 is prevented from being in contact with the control element controlling the supply of power to the heating unit 121. Furthermore, preferably not only the mounting portion of the element mounted on the board, but the entire element is arranged so that it is not exposed to the power supply accommodating portion 200. In this case, when attempting to receive the power source unit 111, the main body side board unit 90 is not exposed to the user and the connection portion 26 is exposed.

In the example shown in Fig. 3, when the bottom wall portion 21 is opened with the power supply unit 110 accommodated in the power supply accommodating portion 200, the power supply accommodating portion 200 is in communication with the outside of the case 20, allowing the power supply unit 110 to be removed from the power supply accommodating portion 200.

### 3-2. Second Example of an Insertion and Removal Aspect of the Power Supply Unit

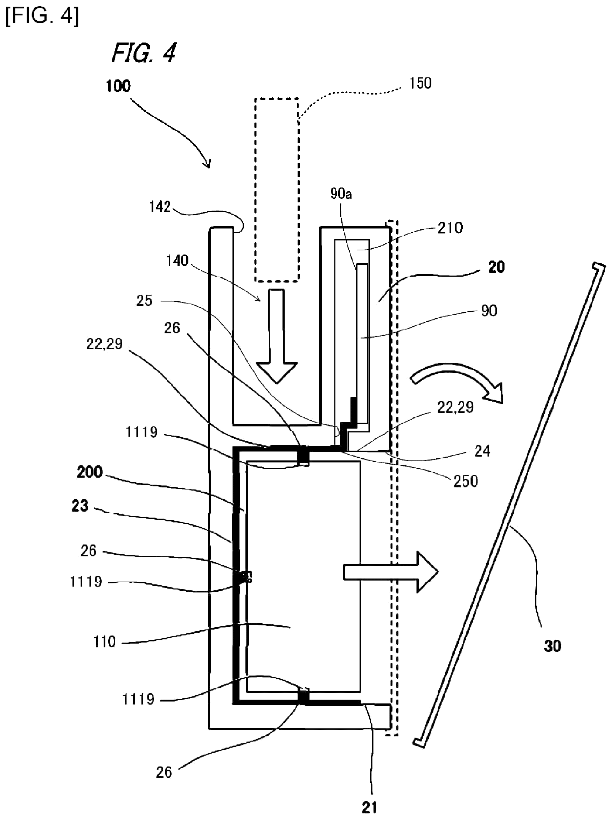

Fig. 4 is a diagram illustrating a second example of an insertion/removal aspect of the power supply unit 110. Note that, in this section, the focus is on the areas that differ from those described in Fig. 3, and the areas that are common to those described in Fig. 3 will be omitted or simplified as appropriate.

In the example shown in Fig. 4, when the previously described panel 30 is removed from the case 20, the power supply accommodating portion 200 is in communication with the outside of the case 20, allowing the power source unit 111 to be inserted into the power supply accommodating portion 200 from the transverse direction of the case 20. In other words, the opening 24 is provided in a side surface of the case 20 and the opening 24 is configured to be opened and closed with the panel 30.

As the opening 24 is provided in the side surface of the case 20, the board accommodating portion 210 is not located in the insertion direction of the power supply unit 110 inserted through the opening 24.

In the example shown in Fig. 4, terminals 1119 of the power supply unit 110 are provided on each of the top, bottom and side faces of the power source unit 111. For this reason, the connection portions 26 of the case 20 are also provided on each of the top wall portion 22, the bottom wall portion 21 and a side wall portion 23. Note that the terminals 1119 of the power supply unit 110 may be arranged aggregated in one place on the power supply unit 110, as shown in Fig. 3, and the connection portions 26 on the case 20 may also be aggregated in one place on the case 20 to correspond to this.

Since the board accommodating portion 210 is not located in the insertion direction of the power supply unit 110 inserted from the opening 24, the power source unit 111 does not typically enter the board accommodating portion 210. However, when the power source unit 111 is inserted at an angle from the opening 24, a portion of the power supply unit 110 may enter the board accommodating portion 210, but the top wall portion 22 arranged between the power supply accommodating portion 200 and the board accommodating portion 210 as viewed from the power power supply accommodating portion 200 restricts contact by the power source unit 111 with the electrical connection between the elements arranged on the main body side board unit 90 and the main body side board unit 90. In this example, the top wall portion 22 acts as a regulator 29 preventing intrusion of the power supply unit 110 into the board accommodating portion 210.

In the example shown in Fig. 4, when the panel 30 is removed from the case 20 with the power source unit 111 accommodated in the power supply accommodating portion 200, the power supply accommodating portion 200 is in communication with the outside of the case 20, and the power source unit 111 can be removed from the power supply accommodating portion 200. Note that the panel 30 may be opened and closed about a hinge portion as described in Fig. 4.

### 3-3. Third Example of an Insertion and Removal Aspect of the Power Source Unit

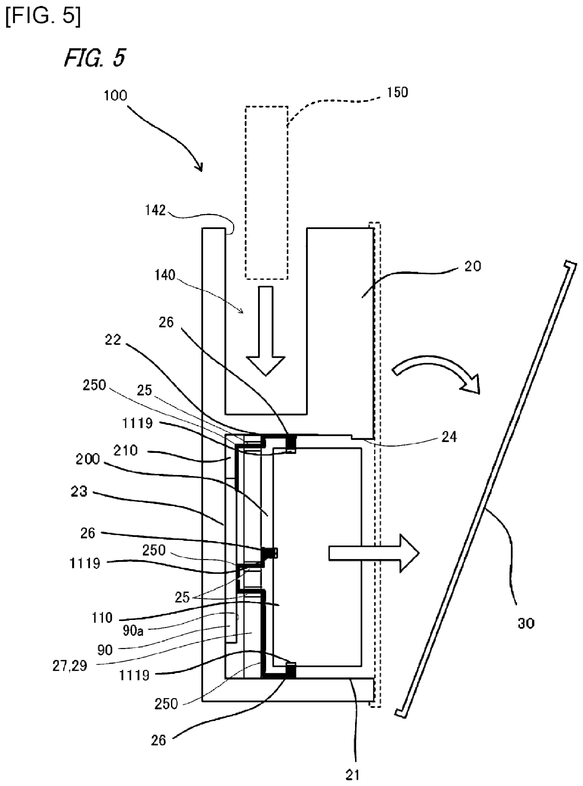

Fig. 5 is a diagram illustrating a third example of an attachment/detachment aspect of the power supply unit 110. Note that the focus here is on the areas that differ from those described in Fig. 3 or 4, and the areas that are common to those described in Fig. 3 or 4 will be omitted or simplified as appropriate.

In the example shown in Fig. 5, similar to the example shown in Fig. 4, the opening 24 is provided on a side surface of the case 20, and the opening 24 is configured so that it can be opened and closed with the panel 30. On the other hand, unlike the example shown in Fig. 4, in the insertion direction of the power supply unit 110 inserted from the opening 24, the power supply accommodating portion 200 and the board accommodating portion 210 are provided in this order from the opening 24. A dividing wall portion 27 is arranged between the power supply accommodating portion 200 and the board accommodating portion 210 in the insertion direction of the power supply unit 110.

In the example shown in Fig. 5, terminals 1119 of the power supply unit 110 are provided on each of the top, bottom, and side faces of the power supply unit 110. For this reason, the connection portions 26 of the case 20 are also provided in each of the top wall portion 22, bottom wall portion 21, and dividing wall portion 27. Note that the terminals 1119 of the power supply unit 110 may be arranged aggregated in one place on the power supply unit 110, as shown in Fig. 3, and the connection portions 26 on the case 20 may also be aggregated in one place on the case 20 to correspond to this.

The dividing wall portion 27 may be provided integrally with the case 20, or provided separately from the case 20 and attached to the case 20, but when the power supply unit 110 is replaced, it is arranged fixed to the case 20. When the power supply unit 110 is replaced, the power source unit 111 is prevented from entering the board accommodating portion 210 and coming into contact with elements arranged on the main body side board unit 90. In this example, the dividing wall portion 27 acts as a regulator 29 preventing intrusion of the power supply unit 110 into the board accommodating portion 210.

The communication portion 25 is formed in the dividing wall portion 27 in communication between the power supply accommodating portion 200 and the board accommodating portion 210, and the flexible cable 250 extends from the connection portion 26 through the communication portion 25 and is connected to the main body side board unit 90. In addition to the through-hole through which the flexible cable 250 is inserted, the dividing wall portion 27 may be provided with communication portions 25 such as through-holes, gaps, cut-outs, or the like. However, the area of the communication portions 25 orthogonal to the insertion direction of the power supply unit 110 is smaller than the area of the power supply unit 110 orthogonal to the insertion direction of the power supply unit 110. This prevents the power source unit 111 from entering the board accommodating portion 210 via the communication portions 25 and contacting elements arranged on the main body side board unit 90.

The dividing wall portion 27 preferably covers at least the electrical connections of elements arranged on the first face 90a of the main body side board unit 90 with the main body side board unit 90, as viewed from the opening 24, more preferably covers the elements arranged on the main body side board unit 90, and even more preferably covers the entire main body side board unit 90. By covering at least the connections between the board and elements arranged on the main body side board unit 90, the generation of short circuits is prevented when the power supply unit 110 is replaced.

In the example shown in Fig. 5, when the panel 30 is removed from the case 20 with the power source unit 111 accommodated in the power supply accommodating portion 200, the power supply accommodating portion 200 is in communication with the outside of the case 20, and the power source unit 111 can be removed from the power supply accommodating portion 200. Note that the panel 30 may be opened and closed about a hinge portion as described in Fig. 3.

### 4. Configuration Example of the Power Supply Unit

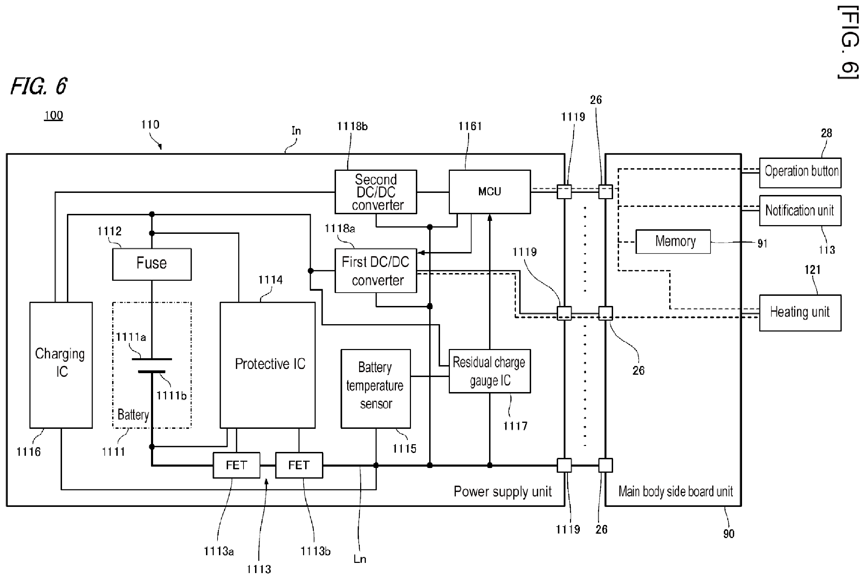

Fig. 6 is a diagram showing an example of the configuration of the power supply unit 110. The power line Ln shown in Fig. 6 is a power line to which a reference potential (also referred hereinafter as "ground potential") is applied. Hereinafter, the power line Ln will also be referred to as the "ground line Ln," and being electrically connected to the ground line Ln is also referred to as "being grounded." Furthermore, unless explicitly stated otherwise, hereinafter ground potential is taken to be 0 [V], and voltages are assumed to mean the potential difference from the ground potential.

As shown in Fig. 6, the power supply unit 110 comprises, for example, a battery 1111, a fuse 1112, switch circuitry 1113, a protection IC 1114, a battery temperature sensor 1115, a charging IC 1116, a residual charge gauge IC 1117, a first DC/DC converter 1118a, a second DC/DC converter 1118b, and an MCU 1161.

Furthermore, the power supply unit 110 is equipped with a plurality of terminals 1119 that electrically connect its internal parts and external parts. In Fig. 6, three terminals 1119 are illustrated as the plurality of terminals 1119, but the number of terminals 1119 is not limited to three, and for example there may be four or more.

In the example shown in Figure 6, the power supply unit 110 is configured by electrically connecting and packaging a plurality of components, including the battery 1111, the fuse 1112, the switch circuitry 1113, the protection IC 1114, the battery temperature sensor 1115, the charging IC 1116, the residual charge gauge IC 1117, the first DC/DC converter 1118a, the second DC/DC converter 1118b, and the MCU 1161.

Here, packaging means, for example, combining a plurality of components into one package, and fixing them so that their relative positions remain unchanged. Packaging is achieved by, for example, covering the plurality of enclosed components as a single unit with an insulator (insulator) such as a resin.

In the example shown in Fig. 6, the plurality of components such as the battery 1111 and the MCU 1161 are covered as a single unit by an insulator In so that they are not exposed to the outside of the power supply unit 110. This enables the plurality of components enclosed in the power supply unit 110, such as the battery 1111 and the MCU 1161, to be protected from static electricity, external noise, and so on. Also, by configuring the power supply unit 110 with the plurality of components such as the battery 1111 and the MCU 1161 as a single unit, replacement of the power supply unit 110 enables the plurality of components to be replaced as a single unit, and improves user convenience.

The battery 1111 is, for example, a rechargeable battery that constitutes the power source unit 111, and is equipped with a positive terminal 1111a and a negative terminal 1111b, and is configured to output a terminal voltage of approximately 4 [V]. Hereinafter, the output voltage (i.e. the terminal voltage) of the battery 1111 is also referred to as the "power source voltage Vbat". Note that various types of secondary battery such as a lithium-ion secondary battery or a nickel-metal hydride battery, for example, can be employed as the battery 1111.

The positive terminal 1111a of the battery 1111 is connected via the fuse 1112 to both the charging IC 1116 and the first DC/DC converter 1118a. Each of the charging IC 1116 and the first DC/DC converter 1118a can thereby be supplied with the power source voltage Vbat. Also, the negative terminal 1111b of the battery 1111 is grounded.

The fuse 1112 is a protective element that melts when the current flowing is above a predetermined value. By providing such a fuse 1112 between the battery 1111 and the charging IC 1116 and first DC/DC converter 1118a, the flow of overcurrent to the charging IC 1116 and the first DC/DC converter 1118a can be prevented, even if an overcurrent is output from the battery 1111 that is greater than or equal to a predetermined value. Therefore, it is possible to protect the charging IC 1116 and the first DC/DC converter 1118a from overcurrent.

The switch circuitry 1113 is a circuit that acts as a switch to turn on and off charging and discharging of the battery 1111 (in other words the power source unit 111). In the example shown in Fig. 6, the switch circuitry 1113 is configured by connecting in series a first FET 1113a and a second FET 1113b and is provided on the ground line Ln.

The first FET 1113a and second FET 1113b can each be N-channel Metal-Oxide-Semiconductor Field Effect Transistors (MOSFETs), for example. In this case, the source terminal of the first FET 1113a is connected to the negative terminal 1111b, the drain terminal of the first FET 1113a is connected to the drain terminal of the second FET 1113b, and the gate terminal of the first FET 1113a is connected to the protective IC 1114. Also, the source terminal of the second FET 1113b is grounded, and the gate terminal of the second FET 1113b is connected to the protective IC 1114.

The protective IC 1114 is an IC that functions as a control element (in other words a controller) for controlling the switch circuitry 1113. More specifically, the protective IC 1114 is connected to both the positive terminal 1111a and the negative terminal 1111b of the battery 1111, and is provided to enable the acquisition of the power supply voltage Vbat, which is the output voltage of the battery 1111. The protective IC 1114 then controls the switch circuitry 1113 based on the power supply voltage Vbat.

The protective IC 1114 can, for example, turn the first FET 1113a on (in other words, conduction state) or off (in other words, closed state) by controlling the gate voltage of the first FET 1113a. Similarly, the second FET 1113b can be turned on or off by controlling its gate voltage.

As an example, the protective IC 1114 stops charging of the battery 1111 by turning off the second FET 1113b if the power supply voltage Vbat reaches a predetermined upper limit during charging of the battery 1111. This makes it possible to prevent overcharging, such as when the power supply voltage Vbat is higher than the predetermined upper limit value but charging continues.

As another example, the protective IC 1114 stops discharging from the battery 1111 by turning off the first FET 1113a if the power supply voltage Vbat reaches a predetermined lower limit during discharging from the battery 1111. This makes it possible to prevent over-discharge, such as when the power supply voltage Vbat is lower than the predetermined lower limit value but discharging continues.

Furthermore, the protective IC 1114 may control the switch circuitry 1113 based on the current value of the current flowing through the ground line Ln. As an example, the protective IC 1114 may stop charging of the battery 1111 by turning off the second FET 1113b when an overcurrent (in other words, a current greater than or equal to a predetermined value) flows through the ground line Ln while charging the battery 1111. In this way, it is possible to protect the battery 1111, and so on, from an overcurrent if an overcurrent occurs during charging of the battery 1111.

As another example, the protective IC 1114 may stop discharging from the battery 1111 by turning off the first FET 1113a when an overcurrent flows through the ground line Ln during discharging from the battery 1111. In this way, even if an overcurrent occurs during discharging from the battery 1111, it is possible to protect the main body side board unit 90, and so on, from the overcurrent.

The protective IC 1114 may also be connected to a battery temperature sensor 1115 to enable the battery 1111 (i.e., the power source unit 111) temperature (hereinafter also referred to as "battery temperature Tbat") to be obtained. Here, the battery temperature sensor 1115 is a temperature element that enables the battery temperature Tbat to be measured by outputting a parameter (for example, the electrical resistance value) or a signal relating to the battery temperature Tbat. For example, the battery temperature sensor 1115 may, for example, be an NTC thermistor comprising a resistor having an NTC characteristic, or a PTC thermistor comprising a resistor having a PTC characteristic, and is positioned in close proximity to the battery 1111. In this case, the protective IC 1114 obtains the battery temperature Tbat based on the output value of the battery temperature sensor 1115.

The protective IC 1114 may then control the switch circuitry 1113 based on the battery temperature Tbat. As an example, the protective IC 1114 may stop charging of the battery 1111 by turning off the second FET 1113b when a parameter indicating that the battery temperature Tbat is greater than or equal to a predetermined temperature is output from the battery temperature sensor 1115 during charging of the battery 1111. This enables charging to be stopped if the battery 1111 becomes hot during charging, thereby improving safety.

As another example, the protective IC 1114 may stop discharging from the battery 1111 by turning off the first FET 1113a when a parameter indicating that the battery temperature Tbat is greater than or equal to a predetermined temperature is output from the battery temperature sensor 1115 during discharging from the battery 1111. This enables discharging to be stopped if the battery 1111 becomes hot during discharging, thereby improving safety.

The charging IC 1116 is an IC that is provided between a power receiving unit (not shown on the drawings) configured to be able to receive power from an external power source and the battery 1111, and that functions as a charging control element to control charging of the battery 1111 (i.e., the power source unit 111) by power received by the power receiving unit.

Here, the power receiving unit can, for example, be a receptacle that complies with standards such as USB Type-C (registered trademark), Micro USB, or Lightning (registered trademark). Also, the power receiving unit is not limited to such a receptacle, and may be configured, for example, by a power receiving coil or the like configured to be capable of contactlessly receiving power delivered from an external power source. Note that the power receiving unit need only be electrically connected to the charging IC 1116, and its placement position is not particularly restricted. In other words, the power receiving unit may be provided in the power supply unit 110, may be provided in the case 20, or may be provided elsewhere in the inhalation device 100.

The charging IC 1116 is also connected to the second DC/DC converter 1118b. The charging IC 1116 may then generate first system voltage Vsys1 power from the power of the battery 1111 (in other words, power at the power source voltage Vbat) and supply power at the first system voltage Vsys1 to the second DC/DC converter 1118b. Here, the first system voltage Vsys1 is a voltage greater than 0 (in other words, greater than the ground potential). Note that the first system voltage Vsys1 may be a different voltage than the power source voltage Vbat or may be the same voltage.

The residual charge gauge IC 1117 is an IC that functions as a residual charge gauge element to obtain the remaining charge of the battery 1111 (hereinafter also referred to as "remaining battery charge Cbat"). More specifically, the residual charge gauge IC 1117 is, for example, connected to the battery 1111, and provided with the ability to obtain the power source voltage Vbat. Also, in the example shown in Fig. 6, the residual charge gauge IC 1117 is connected to the battery temperature sensor 1115, and is provided to also enable the battery temperature Tbat to be obtained. The residual charge gauge IC 1117 then derives the remaining battery charge Cbat based on the power source voltage Vbat and the battery temperature Tbat, and outputs information indicating the derived remaining battery charge Cbat (also referred to hereinafter as "remaining battery charge information") to the MCU 1161.

As an example, the residual charge gauge IC 1117 derives the remaining battery charge Cbat corresponding to the combination of the present power source voltage Vbat and the battery temperature Tbat using a table or calculation defining the relationship between the combination of the power source voltage Vbat and the battery temperature Tbat and the remaining battery charge Cbat. In this way, by deriving the remaining battery charge Cbat taking into account not only the power supply voltage Vbat but also the battery temperature Tbat, it is possible to derive the remaining battery charge Cbat with better accuracy than when deriving the remaining battery charge Cbat from the power supply voltage Vbat only.

Furthermore, the residual charge gauge IC 1117 may, for example, count the cycle count based on the remaining battery charge Cbat, and derive the remaining battery charge Cbat also using the cycle count value, which is the count value thereof. Here, the cycle count is, for example, a count of the number of times the state of charge (SOC) of the battery 1111 has been charged to a total of 100 [%] as one cycle, also referred to as a "full charge cycle". The cycle count may also be a count of the number of times a total of SOC 100 [%] of discharges have taken place as one cycle.

Furthermore, the residual charge gauge IC 1117 derives the state of health (SOH) of the power source unit 111 based, for example, on the power supply voltage Vbat and the cycle count value, and the derived SOH may also be used to derive the remaining battery charge Cbat. In this way it is possible to derive a more accurate remaining battery charge Cbat.

The first DC/DC converter 1118a is, for example, an IC that is used in combination with a power inductor, which is not shown on the drawings, and that functions as a voltage converter for converting an input DC voltage into a prescribed DC voltage. In the example shown in Fig. 6, the first DC/DC converter 1118a can be supplied with power at the power supply voltage Vbat. The first DC/DC converter 1118a then generates, from the supplied electrical power, power at a heater voltage Vheat suitable for heating by the heating unit 121.

The power at the heater voltage Vheat generated by the first DC/DC converter 1118a is output to the outside of the power supply unit 110 via a predetermined terminal 1119. When the power supply unit 110 is installed in the case 20, the terminal 1119 from which the power at the heater voltage Vheat is output is connected to the heating unit 121 via a connection portion 26 corresponding to the terminal 1119 or a circuit provided in the main body side board unit 90 (board), etc.

In other words, when the power supply unit 110 is installed in the case 20, the first DC/DC converter 1118a is connected to the heating unit 121 via a predetermined terminal 1119, a connection portion 26 corresponding to this terminal 1119, and a circuit provided in the main body side substrate unit 90, etc. This enables power at the heater voltage Vheat generated by the first DC/DC converter 1118a to be supplied to the heating unit 121.

Note that the heater voltage Vheat is, for example, a higher voltage than the power supply voltage Vbat, and can be 5 [V] to name one example. This makes it possible to efficiently perform heating by the heating unit 121.

The second DC/DC converter 1118b is, for example, an IC that is used in combination with a power inductor, which is not shown on the drawings, and that functions as a voltage converter for converting an input DC voltage into a prescribed DC voltage. In the example shown in Fig. 6, the second DC/DC converter 1118b can be supplied with power at the first system voltage Vsys1 from the charging IC 1116. The second DC/DC converter 1118b then generates from the supplied power, power at a second system voltage Vsys2 required to operate the MCU 1161.

The power at the second system voltage Vsys2 generated by the second DC/DC converter 1118b is supplied to the MCU 1161. The power at the second system voltage Vsys2 may also be provided to elements other than the MCU 1161. Note that the second system voltage Vsys2 is, for example, a constant voltage, and can be 3.5 [V] to name one example. Keeping the voltage of power supplied to the MCU 1161 constant at the second system voltage Vsys2 enables the MCU 1161 to operate stably.

The MCU 1161 is an IC mainly configured with a processor that performs various operations, and is a control element that controls the entire power supply unit 110 using a processor executing a pre-prepared program.

As an example, the MCU 1161 supplies or stops power from the power supply unit 110 to the heating unit 121 by controlling the first DC/DC converter 1118a, which generates power at the heater voltage Vheat.

Also, when the power supply unit 110 is installed in the case 20, the MCU 1161 is connected to the heating unit 121 via, for example, a predetermined terminal 1119, the connection portion 26 corresponding to this terminal 1119, and a circuit provided in the main body side board unit 90 (for example, a heater circuit 95 described below), etc. as shown in Fig. 6, and is capable of acquiring the electrical resistance value of a heating resistor (for example, a heating resistor Rheat described later) that constitutes the heating unit 121.

Furthermore, when the power supply unit 110 is installed in the case 20, the MCU 1161 is also connected to the notification unit 113, the operation button 28, and so on, provided on the case 20, via a predetermined terminal 1119, a connection part 26 corresponding to the terminal 1119, and a circuit provided on the main body side board unit 90, and so on. This enables the MCU 1161 to perform predetermined notifications by the notification unit 113, or to accept an operation performed on the operation button 28.

Also, when the power supply unit 110 is installed in the case 20, the MCU 1161 is also connected to a memory 91 provided on the main body side board unit 90 via a predetermined terminal 1119, a connection part 26 corresponding to the terminal 1119, and a circuit provided on the main body side board unit 90, etc. This allows the MCU 1161 to access the memory 91 as appropriate to retrieve information stored in the memory 91.

The memory 91 is, for example, configured from a non-volatile memory such as an EPROM (Erasable Programmable Read only Memory) or a flash memory, and stores information about the heating unit 121. As an example, in this embodiment, the memory 91 stores information (hereinafter also referred to as "calibration information") that associates the temperature of the heating unit 121 (hereinafter also referred to as "heater temperature Theat") with the electrical resistance value of the heating resistor constituting the heating unit 121 when the heater temperature is Theat.

Note that in Fig. 6, although the diagram shows the heating unit 121, notification unit 113, operation button 28, and memory 91 each connected to the MCU 1161 via a single terminal 1119 and connection portion 26, this is a schematic representation to avoid complicating the diagram. Typically, a dedicated terminal 1119 and connection portion 26 are provided between each of the heating unit 121, the notification unit 113, the control button 28, and the memory 91 and the MCU 1161. The heating unit 121, notification unit 113, operation button 28, and memory 91 are each individually connected to the MCU 1161 via their respective dedicated terminal 1119 and connection portion 26.

### 5. Example of the Heater Circuit

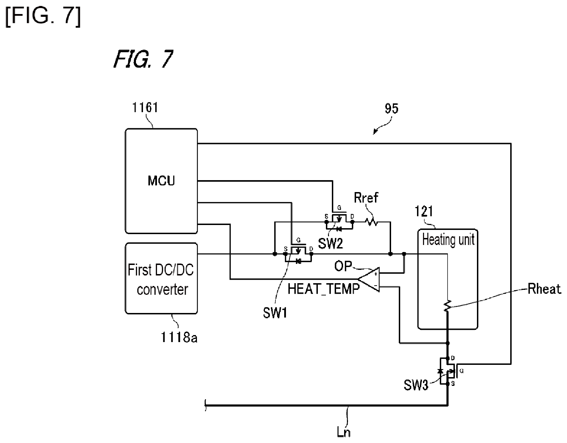

Fig. 7 is a diagram showing an example of the heater circuit 95 for obtaining the electrical resistance value of the heating unit 121. The heater circuit 95 shown in Fig. 7 is, for example, provided on the main body side board unit 90 and comprises a switch SW1, a switch SW2, a switch SW3, a reference resistor Rref, and an operational amplifier OP.

Each switch of switch SW1, switch SW2 and switch SW3 is a switch that is connected to the MCU 1161 when the power supply unit 110 is installed in the case 20, and are switched open and closed according to control by the MCU 1161.

As shown in Fig. 7, each switch of switch SW1, switch SW2, and switch SW3 can be, for example, an N-channel type MOSFET. In this case, the gate terminals of each of these switches are connected to the MCU 1161 when the power supply unit 110 is installed in the case 20.

One end of the switch SW1 (for example, the source terminal) is connected to the first DC/DC converter 1118a when the power supply unit 110 is installed in the case 20. Also, the other end of the switch SW1 (for example, the drain terminal) is connected with one end of the heating resistor Rheat constituting the heating unit 121.

One end of the switch SW2 (for example, the source terminal) is connected to the first DC/DC converter 1118a when the power supply unit 110 is installed in the case 20. Also, the other end of the switch SW2 (for example, the drain terminal) is connected to one end of the heating resistor Rheat via the reference resistor Rref having a predetermined electrical resistance value.

One end of the switch SW3 (for example, the drain terminal) is connected to the other end of the heating resistor Rheat. Also, the other end of the switch SW3 (for example, the source terminal) is grounded. In other words, the switch SW3 functions as a low side switch for the heating unit 121.

The operational amplifier OP is a device that has a non-inverting input terminal, an inverting input terminal, and an output terminal, and is an element that outputs a voltage signal obtained by amplifying the difference between the inputs to the non-inverting input terminal and the inverting input terminal from the output terminal. For example, it is constructed using an integrated circuit (IC).

The non-inverting input terminal of the operational amplifier OP is connected to one end of the heating resistor Rheat, and the inverting input terminal is connected to the other end of the heating resistor Rheat. Also, the output terminal of the operational amplifier OP is connected to the MCU 1161 when the power supply unit 110 is installed in the case 20.

When the power supply unit 110 is installed in the case 20 and switch SW1 and switch SW3 are on and switch SW2 is off, power at the heater voltage Vheat generated by the first DC/DC converter 1118a is supplied to the heating resistor Rheat (in other words, the heating unit 121) via the switch SW1.

Also, when the power supply unit 110 is installed in the case 20 and switch SW2 and switch SW3 are on and switch SW1 is off, the power at the heater voltage Vheat generated by the first DC/DC converter 1118a is supplied to the heating resistor Rheat via the switch SW2 and reference resistor Rref.

Also, in this case the voltage divided by the reference resistor Rref and the heating resistor Rheat is input to the non-inverting input terminal of the operational amplifier OP, and the operational amplifier OP outputs a voltage signal (hereinafter also referred to as the "HEAT_TEMP signal"), obtained by amplifying this divided voltage, to the MCU 1161. This HEAT_TEMP signal depends on the electrical resistance value of the heating unit 121 (and more specifically the heating resistor Rheat), in other words it changes with the heater temperature Theat. Therefore, the MCU 1161 can acquire the heater temperature Theat based on the HEAT_TEMP signal.

Note that in the examples described here, the switch SW2 and the reference resistor Rref can also be supplied with the heater voltage Vheat similar to switch SW1, but this is not a limitation. For example, the switch SW2 and the reference resistor Rref may be provided with a lower voltage than the heater voltage Vheat. By having the voltage supplied to the switch SW2 and the reference resistor Rref lower than the heater voltage Vheat, it is possible to reduce the power consumption for obtaining the heater temperature Theat.

Also, in the examples described here, the heater circuit 95 is arranged to be provided in the main body side board unit 90, but this is not a limitation. Some or all of the components included in the heater circuit 95 may be provided in the power supply unit 110. In that case, which components are provided in the power supply unit 110 and which components are provided in the main body side board unit 90 may be defined by the manufacturer of the inhalation device 100 as appropriate. As an example, components of the heater circuit 95 other than the switch SW3 may be provided in the power supply unit 110.

### 6. Example of Control by the MCU

Next, an example of control by the MCU 1161 is explained in detail.

The MCU 1161 causes the heating unit 121 to generate an aerosol in response to a request for aerosol generation from the user. The request for aerosol generation can be made by, for example, pressing the operation button 28, but this is not a limitation. For example, opening the shutter 50 may be a request for aerosol generation instead of or in addition to pressing the operation button 28. Opening of the shutter 50 can be detected by, for example, providing a Hall sensor in the case 20 to detect the position of the shutter 50.

The MCU 1161 generates aerosols by controlling the heater temperature Theat based on a pre-prepared heating profile, for example. Here, the heating profile is information that defines a time series transition of a target temperature, which is the target value of the heater temperature Theat. The heating profile is typically designed so that, when the user inhales the aerosol generated from the stick-type substrate 150, the flavor tasted by the user is optimized. Therefore, controlling the heater temperature Theat based on the heating profile makes it possible to optimize the flavor tasted by the user, enabling a high-quality smoking experience to be provided to the user.

In the control of the heater temperature Theat based on the heating profile (hereinafter also referred to simply as "heating control"), the MCU 1161 obtains the heater temperature Theat at a predetermined cycle (for example, every 5 [ms]), and the time series transition of the heater temperature Theat is controlled to be similar to the time series transition of the target temperature defined in the heating profile.

The heater temperature Theat can be obtained based on the electrical resistance value of the heating unit 121 (specifically the heating resistor Rheat). This is because the electrical resistance value of the heating resistor Rheat varies with temperature. The electrical resistance value of the heating resistor Rheat can be obtained via the heater circuit 95 as previously described.

Also, in this embodiment, the MCU 1161 refers to calibration information stored in the memory 91 of the main body side board unit 90 in order to obtain the heater temperature Theat. For example, if the electrical resistance value of the heating unit 121 is α[Ω], the MCU 1161 retrieves the heater temperature Theat associated with α[Ω], β°C, in the calibration information.

The properties of the heating unit 121 (specifically the relationship between the electrical resistance value and the heater temperature Theat) vary due to individual differences. Therefore, individual differences in the heating unit 121 must also be taken into account in order to obtain accurate heater temperature Theat. However, in an inhalation device 100 with a replaceable power supply unit 110, the combination of the heating unit 121 and the MCU 1161 is not determined in advance. As a result, it is difficult to store calibration information taking into account individual differences of the heating unit 121 combined with the MCU 1161 in advance in the MCU 1161.

Therefore, in the present embodiment, the calibration information taking into consideration individual differences of the heating unit 121 is stored in the memory 91 of the main body side board unit 90 which cannot be separated from the heating unit 121. The MCU 1161 then refers to this calibration information and obtains the heater temperature Theat. This allows accurate heater temperature Theat to be obtained even if the characteristics of the heating unit 121 in combination with the MCU 1161 vary due to individual differences. Therefore, appropriate heating control can be performed, and the user can be provided with a high-quality smoking experience. Therefore, user convenience is improved.

Note that the temperature control of the heating unit 121 (in other words, control of the heater temperature Theat) can be realized by known feedback control, for example. For example, the MCU 1161 may cause power from the power supply unit 110 (or more specifically, the first DC/DC converter 1118a) to be supplied to the heating unit 121 in the form of pulses by pulse width modulation (PWM) or pulse frequency modulation (PFM). In such case, the MCU 1161 can perform temperature control of the heating unit 121 by adjusting the duty ratio of the power pulses.

In feedback control, the MCU 1161 may supply power to the heating unit 121 by controlling the duty cycle, for example, based on the difference between the actual heater temperature Theat and the target temperature, etc. This duty cycle can for example be controlled via the switch SW1 shown in Fig. 7.

Also, the feedback control may be, for example, PID control (Proportional-Integral-Differential Controller). Alternatively, the MCU 1161 may perform simple ON-OFF control. For example, the MCU 1161 may perform heating by the heating unit 121 (in other words, supply power to the heating unit 121) until the actual temperature reaches the target temperature, stop heating by the heating unit 121 when the actual temperature has reached the target temperature, and once again perform heating by the heating unit 121 when the actual temperature falls below the target temperature.

Also, when there is a request for aerosol generation from the user, the MCU 1161 may determine whether the remaining battery charge Cbat at that time is greater than or equal to a predetermined heating permit threshold, and perform heating control based on determining that the remaining battery charge Cbat is greater than or equal to the heating permit threshold. This allows heating control to be performed only if the remaining battery charge Cbat is greater than or equal to the heating permit threshold, in other words only if there is sufficient remaining battery charge Cbat to complete the heating control. Therefore, it is possible that the heating control is interrupted due to a lack of remaining battery charge Cbat, which prevents wasted consumption of the stick-type substrate 150.

The MCU 1161 may also stop the supply of power from the power supply unit 110 to the heating unit 121 if it detects a predetermined anomaly, such as the heater temperature Theat exceeding a predetermined upper limit, during heating control. For example, the MCU 1161 can stop supplying power to the heating unit 121 from the power supply unit 110 by disabling the first DC/DC converter 1118a or by turning off the switch SW3 which is the low side of the heating unit 121.

The MCU 1161 may also be configured to notify the user, via the notification unit 113, that the heating is being controlled, during the heating control. As an example, the MCU 1161 may cause the light-emitting device constituting the notification unit 113 to light up in a predetermined light-emitting mode to notify the user that the heating is being control. In this way, the user can be aware that the heating control is taking place, improving user convenience.

The MCU 1161 may also be configured to notify the user of the remaining battery charge Cbat via the notification unit 113. As an example, the MCU 1161 may cause the light-emitting device constituting the notification unit 113 to light up in a light-emitting mode in accordance with the present remaining battery charge Cbat. In this way, the remaining battery charge Cbat can be determined by the user, and user convenience can be improved.

### 7. Advantageous Effects of the Embodiment

As explained above, the power supply unit 110 of this embodiment includes the battery 1111 constituting the power source unit 111, and the MCU 1161 being a control element controlling the supply of power from the power source unit 111 (in other words, the battery 1111) to the heating unit 121. Also, the power supply unit 110 is configured with a plurality of constituent components fixed together as a unit, including the MCU 1161, and the power supply unit is removably arranged in the power supply accommodating portion 200 of the case 20 with the plurality of components fixed together as a unit. This allows the user to replace the power supply unit 110. For example, if repeated charging and discharging causes the battery 1111 to degrade and its performance degrades, the user can replace it with a new power supply unit 110 to enable full use of the inhalation device 100 again. Therefore, user convenience is improved.

Also, the MCU 1161 controlling the supply of power to the heating unit 121 is provided in the power supply unit 110, so even if the power supply unit 110 can be replaced by the user, it is possible to prevent the MCU 1161 from being combined with a battery 1111 that was not intended for the MCU 1161. Therefore, the power from the power supply unit 110 to the heating unit 121 can be properly controlled by the MCU 1161, to provide a high quality smoking experience to the user. Therefore, user convenience is improved. Also, the safety of the inhalation device 100 is improved as the MCU 1161 can properly control the supply of power from the power supply unit 110 to the heating unit 121.

Also, the power supply unit 110 further includes the first DC/DC converter 1118a, which is a power converter that generates power at the heater voltage Vheat by boosting the power supply voltage Vbat (i.e. the power of the battery 1111), and is configured to enable power at the heater voltage Vheat generated by the first DC/DC converter 1118a to be supplied to the heating unit 121. This allows the current value of the power output from the power supply unit 110 to be reduced compared with the case where power at the power supply voltage Vbat is output from the power supply unit 110. Therefore, the size of terminal 1119 of the power supply unit 110 used for providing power to the heating unit 121 and of the connection portion 26 corresponding to this terminal 1119 can be reduced.

The case 20 also contains the board accommodating portion 210 housing the main body side board unit 90 (in other words, a board), the connection portion 26 to which the power supply unit 110 is connected, and the regulator 29 to restrict intrusion of the power supply unit 110 into the board accommodating portion 210. The regulator 29 is then arranged between at least the power supply accommodating portion 200 and the main body side board unit 90 as viewed from the power supply accommodating portion 200. This makes it possible to prevent the power supply unit 110 from intruding into the board accommodating portion 210 when replacing the power supply unit 110. Therefore, when replacing the power supply unit 110, it is possible to prevent the power supply unit 110 from coming into contact with the main body side board unit 90 (for example, electronic components provided on the main body side board unit 90) arranged in the board accommodating portion 210, so it is safe for the user to replace the power supply unit 110.

The inhalation device 100 also comprises a memory 91 storing information about the heating unit 121 inside the case 20 and outside the power supply unit 110 (for example, in the main body side board unit 90 arranged in the case 20). The MCU 1161 then controls the supply of power from the power source unit 111 to the heating unit 121 based on information about the heating unit 121 stored in the memory 91 of the main body side board unit 90, when the power supply unit 110 is installed in the power supply accommodating portion 200. In this way, the MCU 1161 can appropriately control the supply of power from the power supply unit 110 to the heating unit 121, even if the characteristics of the heating unit 121 in combination with the MCU 1161 vary due to individual differences.

More specifically, the memory 91 stores calibration information corresponding to the electrical resistance value and the temperature of the heating unit 121 as information about the heating unit 121. The MCU 1161 then refers to the calibration information stored in the memory 91 and obtains the temperature of the heating unit 121 based on the electrical resistance value of the heating unit 121, and controls the supply of power from the power source unit 111 to the heating unit 121 based on this temperature. This enables accurate heater temperature Theat to be obtained even if the characteristics of the heating unit 121 in combination with the MCU 1161 vary due to individual differences. Therefore, it is possible for the MCU 1161 to appropriately control the supply of power from the power supply unit 110 to the heating unit 121.

The inhalation device 100 further comprises the heater circuit 95 inside the case 20 and outside the power supply unit 110, for obtaining the electrical resistance value of the heating unit 121. The MCU 1161 then obtains the electrical resistance value of the heating unit 121 via the heater circuit 95 when the power supply unit 110 is installed in the power supply accommodating portion 200. In this way, providing the heater circuit 95 outside the power supply unit 110 enables the heater circuit 95 to be used as is even after replacement of the power supply unit 110, allowing the MCU 1161 to obtain the electrical resistance value of the heating unit 121.

Also, the heater circuit 95 is provided, for example, in the main body side board unit 90, which cannot be separated from the heating unit 121. In this way, by providing the heater circuit 95 in the main body side board unit 90 which cannot be separated from the heating unit 121, it is possible to store, in the memory 91, calibration information that takes into account not only the characteristics of the heating unit 121 but also the characteristics of the heater circuit 95.

Also, the power supply unit 110 further comprises protection circuitry, such as the switch circuitry 1113 and the protective IC 1114, configured to disable charging and/or discharging of the battery 1111. In this way, by providing the combination of the battery 1111 and the protection circuitry in advance, it is possible to provide appropriate protection circuitry that takes into account the characteristics of the battery 1111. Therefore, it is possible to provide appropriate protection by means of the protection circuitry.

Also, the power supply unit 110 further comprises the battery temperature sensor 1115 as a temperature element for measuring the temperature of the battery 1111 (in other words, the battery temperature Tbat). In this way, by combining the battery 1111 and the battery temperature sensor 1115 in advance, it is possible to provide an appropriate battery temperature sensor 1115 that takes into account the characteristics of the battery 1111. Therefore, it is possible to accurately measure the temperature of the battery 1111.

The power supply unit 110 further comprises the charging IC 1116 as a charging control element for controlling the charging of the battery 1111. In this way, by combining in advance the battery 1111 and the charging IC 1116 that controls charging thereof, it is possible for the charging IC 1116 to perform appropriate charging taking into account the characteristics of the battery 1111. Therefore, it is possible to charge the battery 1111 efficiently and safely.

The power supply unit 110 further comprises the residual charge gauge IC 1117 as a residual charge gauge element to obtain the remaining charge of the battery 1111 (in other words, the remaining battery charge Cbat). In this way, by combining in advance the battery 1111 and the residual charge gauge IC 1117, which obtains the remaining charge thereof, it is possible for the residual charge gauge IC 1117 to obtain the remaining charge of the battery 1111 taking into account the characteristics of the battery 1111. Therefore, it is possible to accurately obtain the remaining charge of the battery 1111.

Also, in the inhalation device 100 of this embodiment, the provision of the notification unit 113 in the case 20 rather than in the power supply unit 110 enables notifications to be sent to the user using the notification unit 113 of the case 20 as is after replacement of the power supply unit 110. In this way, providing the notification unit 113 in the case 20 rather than in the power supply unit 110 enables notifications to be sent to the user while also simplifying the configuration of the power supply unit 110 compared with a case where the notification unit 113 is also provided in the power supply unit 110, and the power supply unit 110 can be reduced in size and/or cost. Furthermore, because it is possible to replace the power supply unit 110 without replacing the notification unit 113, the power supply unit 110 can be replaced taking environmental protection into consideration.

Also, in the inhalation device 100, by providing the operation button 28 as an operation detector for detecting user operations on the case 20 rather than in the power supply unit 110, it is possible to use the operation button 28 of the case 20 as is to receive user operations even after replacement of the power supply unit 110. In this way, by providing the operation button 28 on the case 20 rather than in the power supply unit 110, user operations can be received and the configuration of the power supply unit 110 can be simplified compared with providing the operation button 28 in the power supply unit 110, and the power supply unit 110 can be reduced in size and/or cost. It is also possible to replace the power supply unit 110 taking environmental protection into consideration.

### 7.Variant Example of this Embodiment

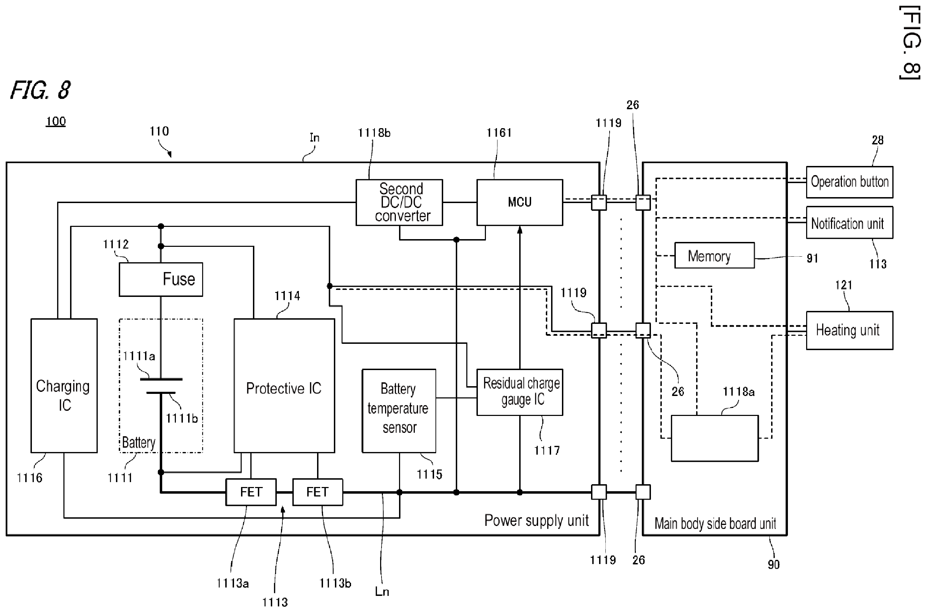

Next, a variant example of the inhalation device 100 is described. Fig. 8 is a diagram showing another example of configuration of the power supply unit 110. Note that here the focus is on the areas that differ from those described in Fig. 6, and the areas that are common to those described in Fig. 6 are omitted or simplified as appropriate.

As shown in Fig. 8, the first DC/DC converter 1118a may be provided on the main body side board unit 90. In this case, the power supply unit 110 outputs the power at the power supply voltage Vbat from the predetermined terminal 1119 connected to the battery 1111. The power at the power source voltage Vbat output from the power supply unit 110 is input to the main body side board unit 90 via the connection portion 26 corresponding to the predetermined terminal 1119 described above, and is supplied to the first DC/DC converter 1118a. The first DC/DC converter 1118a then generates the power at the heater voltage Vheat from the supplied power, and supplies the generated power to the heating unit 121.

In this way, by providing the first DC/DC converter 1118a on the main body side board unit 90, it is possible to reduce power losses due to contact resistance at the connection portion 26 of the main body side board unit 90 and the predetermined terminal 1119 connected to the battery 1111 of the power supply unit 110.

For example, with the configuration shown in Fig. 6, the voltage supplied to the heating unit 121 may be lower than the heater voltage Vheat due to voltage drop caused by contact resistance, and so on, between the terminal 1119 and the connection portion 26. On the other hand, in the case of the configuration shown in Fig. 8, power at the heater voltage Vheat can be generated closer to the heating unit 121 than in the configuration shown in Fig. 6, enabling reduced power loss at the terminal 1119 and the connection portion 26. This enables appropriate power to be supplied to the heating unit 121, making it possible to provide users with a high-quality smoking experience.

As explained above, according to this embodiment, it is possible to provide the inhalation device 100 which is an aerosol-generating device with increased user convenience.

An embodiment of the aerosol-generating device according to the present disclosure was described above, but it goes without saying that the present disclosure is not limited to such an embodiment. It is obvious that a person skilled in the art will be able to conceive of a number of variant examples or modified examples within the scope disclosed in the claims, and any such variant examples or modified examples are naturally understood to fall within the technical scope of the present disclosure. Furthermore, the components in the embodiments described above may be combined in any way within a scope that does not depart from the essential point of the invention.

The present specification, etc. sets forth at least the following features. Corresponding components, etc. in the embodiments described above are shown by way of example in parentheses, but there is no limitation to such components.

(1) An aerosol-generating device (inhalation device 100) for generating an aerosol by heating an aerosol source (stick-type substrate 150), the aerosol-generating device comprising:
   a heating unit for heating the aerosol source;
   a power supply unit (power supply unit 110) having a power source unit (power source unit 111, battery 1111) configured to supply power to the heating unit; and
   a case (case 20) having a power supply accommodating portion (power supply accommodating portion 200) for accommodating the power supply unit,
   wherein
   the power supply unit is configured with a plurality of components fixed together, including a control element (MCU 1161) for controlling the supply of power from the power source unit to the heating unit, and the power supply unit is removably arranged in the power supply accommodating portion in a fixed together state.

According to (1), the power supply unit is removably arranged in the power supply accommodating portion of the case, allowing the user to replace the power supply unit. For example, if repeated charging and discharging causes the power source unit to deteriorate and its performance degrades, the user can replace it with a new power supply unit to enable full use of the aerosol-generating device again. Therefore, user convenience is improved. Furthermore, since the power supply unit comprises a control element for controlling the supply of electrical power from the power source unit to the heating unit, even if the power supply unit can be replaced by the user, it is possible to prevent the control element from being combined with a power source unit that was not intended for the control element. Therefore, the control element can appropriately control the supply of electrical power from the power supply unit (power source unit) to the heating unit, enabling a quality smoking experience to be provided to the user. Therefore, user convenience is improved.

(2) The aerosol-generating device as disclosed in (1), further comprising
a memory (memory 91) for storing information about the heating unit within the case and outside the power supply unit, and
the control element controls the supply of power from the power source unit to the heating unit based on information about the heating unit stored in the memory when the power supply unit is accommodated in the power supply accommodating portion.

According to (2), even if the characteristics of the heating unit combined with the control element vary depending on individual differences, it is possible for the control element to appropriately control the power supply from the power supply unit to the heating unit.

(3) The aerosol-generating device as disclosed in (2), wherein
the memory stores, as information about the heating unit, information associating the electrical resistance value and temperature of the heating unit, and
the control element refers to the information about the heating unit stored in the memory, and obtains the temperature of the heating unit based on the electrical resistance value of the heating unit, and controls the supply of power from the power source unit to the heating unit based on the temperature.

According to (3), even if the characteristics of the heating unit combined with the control element vary depending on individual differences, accurate temperature of the heating unit can be obtained. Therefore, it is possible for the control element to control the supply of power from the power supply unit to the heating unit appropriately.

(4) The aerosol-generating device as disclosed in (3), further comprising
a heater circuit (heater circuit 95), within the case and outside the power supply unit, for obtaining the electrical resistance value of the heating unit, and
the control element obtains, via the heater circuit, the electrical resistance value of the heating unit when the power supply unit is accommodated in the power supply accommodating portion.

According to (4), providing the heater circuit outside the power supply unit enables the heater circuit to be used as is even after replacement of the power supply unit, and the control element can obtain the electrical resistance value of the heating unit.

(5) The aerosol-generating device as disclosed in any of (1) to (4), wherein
the power supply unit further comprises a power converter (first DC/DC converter 1118a) that generates power at a predetermined voltage by boosting the power of the power source unit, and the power supply unit is configured to enable power generated by the power converter to be supplied to the heating unit.

According to (5), it is possible to reduce the current value of the power output from the power supply unit compared with the case where the power of the power source unit is output from the power supply unit as is. Therefore, it is possible to reduce the size of the terminals, etc., of the power supply unit used for supplying power to the heating unit.

(6) The aerosol-generating device as disclosed in any of (1) to (4), further comprising
a power converter (first DC/DC converter 1118a) that generates power at a predetermined voltage by boosting the power of the power supply unit, and
the heating unit is provided within the case,
the case further accommodates a board, and
the power converter is provided on the board and is configured to enable supply of the generated power at the predetermined voltage to the heating unit.

According to (6), power at the predetermined voltage can be generated closer to the heating unit than if the power converter is provided in the power supply unit, thereby reducing power loss when supplying power at the predetermined voltage to the heating unit. This allows power to be appropriately provided to the heating unit, making it possible to provide the user with a high-quality smoking experience.

(7) The aerosol-generating device as disclosed in (5) or (6), wherein
the case comprises:
a board accommodating portion for accommodating the board;
a connection portion connected to the power supply unit; and
a regulator for preventing the power supply unit from intruding into the board storage portion, the regulator is arranged at least between the power supply accommodating portion and the board when viewed from the power supply accommodating portion.

According to (7), it is possible to prevent the power supply unit from intruding into the board accommodating portion when replacing the power supply unit. Therefore, when replacing the power supply unit, the power supply unit is prevented from coming into contact with the board arranged in the board accommodating portion, so the user can safely replace the power supply unit.

(8) The aerosol-generating device as disclosed in any of (1) to (7), wherein
the power supply unit further comprises protection circuitry (switch circuitry 1113, protective IC 1114) configured to enable charging and/or discharging of the power source unit to be stopped.

According to (8), by combining the power source unit and the protection circuitry in advance, it is possible to provide appropriate protection circuitry taking into account the characteristics of the power source unit. Therefore, it is possible to provide appropriate protection by means of the protection circuitry.

(9) The aerosol-generating device as disclosed in any of (1) to (8), wherein
the power supply unit further comprises a temperature element (battery temperature sensor 1115) for measuring the temperature of the power source unit.

According to (9), by combining the power source unit and the temperature element in advance, it is possible to provide an appropriate temperature element taking into account the characteristics of the power source unit. Therefore, it is possible to accurately measure the temperature of the power source unit.

(10) The aerosol-generating device as disclosed in any of (1) to (9), wherein
the power supply unit further comprises a charging control element (charging IC 1116) for controlling charging of the power source unit.

According to (10), by combining the power source unit and the charging control element in advance, it is possible to provide an appropriate charging control element taking into account the characteristics of the power source unit. Therefore, it is possible to charge the power source unit efficiently and safely.

(11) The aerosol-generating device as disclosed in any of (1) to (10), wherein
the power supply unit further comprises a residual charge gauge element (residual charge gauge IC 1117) for obtaining the remaining charge of the power source unit.

According to (11), by combining the power source unit and the residual charge gauge element in advance, it is possible to provide an appropriate residual charge gauge element taking into account the characteristics of the power source unit. Therefore, it is possible to obtain the remaining charge of the power source unit accurately.

(12) The aerosol generating device as disclosed in any of (1) to (11), wherein
the case is provided with a notification unit (notification unit 113) for notifying the user of information.

According to (12), the configuration of the power supply unit can be simplified and the power supply unit can be reduced in size and/or cost less than if the notification unit is provided in the power supply unit, while making it possible to provide notifications to the user.

(13) The aerosol generating device as disclosed in any of (1) to (12), wherein
the case is provided with an operation detector (operation button 28) to detect an operation by the user.

According to (13), the configuration of the power supply unit can be simplified and the power supply unit can be reduced in size and/or cost less than if the operation detector is provided in the power supply unit, while allowing the user to accept the operation.

### REFERENCE SIGNS LIST

20 Case
90 Main body side board unit (board)
100, 100A, 100B Inhalation device (aerosol-generating device)
110 Power supply unit
111, 111A, 111B Power source unit
121, 121A, 121B Heating unit
200 Power source accommodating portion
1113 Switch circuitry (protection circuitry)
1114 Protective IC (protection circuitry)
1115 Battery temperature sensor (temperature element)
1116 Charging IC (charging control element)
1117 Residual charge gauge IC (residual charge gauge element)
1118a First DC/DC converter (power converter)
1161 MCU (control element)

## Claims

1. An aerosol-generating device for generating an aerosol by heating an aerosol source, comprising:
a heating unit for heating the aerosol source;
a power supply unit having a power source unit configured to be capable of supplying power to the heating unit; and
a case having a power supply accommodating portion for accommodating the power supply unit,
wherein
the power supply unit is configured with a plurality of components fixed together, including a control element for controlling the supply of power from the power source unit to the heating unit, and the power supply unit is removably arranged in the power supply accommodating portion in a fixed together state.

2. The aerosol-generating device as claimed in claim 1, further comprising
a memory for storing information about the heating unit, provided within the case and outside the power supply unit, and
the control element controls the supply of power from the power source unit to the heating unit based on information about the heating unit stored in the memory when the power supply unit is accommodated in the power supply accommodating portion.

3. The aerosol-generating device as claimed in claim 2, wherein
the memory stores, as information about the heating unit, information associating the electrical resistance value and temperature of the heating unit, and
the control element refers to the information about the heating unit stored in the memory, and
obtains the temperature of the heating unit based on the electrical resistance value of the heating unit, and controls the supply of power from the power source unit to the heating unit based on the temperature.

4. The aerosol-generating device as claimed in claim 3, further comprising
a heater circuit, within the case and outside the power supply unit, for obtaining the electrical resistance value of the heating unit, and
the control element obtains, via the heater circuit, the electrical resistance value of the heating unit when the power supply unit is accommodated in the power supply accommodating portion.

5. The aerosol-generating device as claimed in any one of claims 1 to 4, wherein
the power supply unit further comprises a power converter that generates power at a predetermined voltage by boosting the power of the power source unit, and the power supply unit is configured to enable power generated by the power converter to be supplied to the heating unit.

6. The aerosol-generating device as claimed in any one of claims 1 to 4, further comprising
a power converter that generates power at a predetermined voltage by boosting the power of the power source unit, and
the heating unit is provided within the case,
the case further accommodates a board, and
the power converter is provided on the board and is configured to enable supply of the generated power at the predetermined voltage to the heating unit.

7. The aerosol-generating device as claimed in claim 5 or 6, wherein
the case comprises:
a board accommodating portion for accommodating the board;
a connection portion connected to the power supply unit; and
a regulator for preventing the power supply unit from intruding into the board accommodating portion, and
the regulator is arranged at least between the power supply accommodating portion and the board when viewed from the power supply accommodating portion.

8. The aerosol-generating device as claimed in any one of claims 1 to 7, wherein
the power supply unit further comprises protection circuitry configured to enable charging and/or discharging of the power source unit to be stopped.

9. The aerosol generation device according to any one of claims 1 to 8, wherein
the power supply unit further comprises a temperature element for measuring the temperature of the power source unit.

10. The aerosol-generating device as claimed in any one of claims 1 to 9, wherein
the power supply unit further comprises a charging control element for controlling charging of the power source unit.

11. The aerosol generation device according to any one of claims 1 to 10, wherein
the power supply unit further comprises a residual charge gauge for obtaining the remaining charge of the power source unit.

12. The aerosol generation device according to any one of claims 1 to 11, wherein
the case is provided with a notification unit for notifying the user of information.

13. The aerosol generation device according to any one of claims 1 to 12, wherein
the case is provided with an operation detector to detect an operation by the user.
